(19) Europäisches Patentamt
European Patent Office
Office européen des brevets

(11) Numéro de publication: **0 273 959**
**B1**

# (12) FASCICULE DE BREVET EUROPEEN

(45) Date de publication du fascicule du brevet: **19.09.90**

(51) Int. Cl.[5]: **F 02 C 3/00,** F 02 C 6/00, F 02 B 71/04

(21) Numéro de dépôt: **87904533.4**

(22) Date de dépôt: **08.07.87**

(86) Numéro de dépôt international: **PCT/FR87/00270**

(87) Numéro de publication internationale: **WO 88/00279 14.01.88 Gazette 88/02**

## (54) INSTALLATION DE PRODUCTION D'ENERGIE A MOTEUR A COMBUSTION INTERNE ET TURBINE.

(30) Priorité: **09.07.86 FR 8610015**

(43) Date de publication de la demande: **13.07.88 Bulletin 88/28**

(45) Mention de la délivrance du brevet: **19.09.90 Bulletin 90/38**

(84) Etats contractants désignés: **AT BE CH DE GB IT LI LU NL SE**

(56) Documents cités:
**DE-A-3 435 732**
**FR-A- 502 165**
**FR-A- 913 415**
**FR-A-1 078 341**
**FR-A-1 437 574**
**FR-A-2 533 628**
**GB-A- 853 183**
**GB-A- 984 939**
**GB-A-2 057 060**
**US-A-2 711 719**
**US-A-3 118 434**

(73) Titulaire: **Benaroya, Henry**
**41, Boulevard du Commandant Charcot**
**F-92200 Neuilly sur Seine (FR)**

(72) Inventeur: **Benaroya, Henry**
**41, Boulevard du Commandant Charcot**
**F-92200 Neuilly sur Seine (FR)**

(74) Mandataire: **Fort, Jacques et al**
**CABINET PLASSERAUD 84, rue d'Amsterdam**
**F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 273 959 B1

## Description

L'invention concerne les installations de production d'énergie comportant un moteur à combustion interne utilisant le cycle Diesel, généralement deux temps, et une turbine à gaz, et notamment les installations fournissant une puissance mécanique de sortie comprise entre quelques MW et quelques dizaines de MW.

A l'heure actuelle, on utilise déjà des installations de ce type, dans lesquelles la turbine à gaz appartient à un turbocompresseur de suralimentation du moteur Diesel, ce dernier fournissant la puissance de sortie. On a également déjà proposé des installations dont le moteur Diesel est du type à bielle-manivelle ou à pistons libres, associé à des compresseurs, alternatifs ou rotatifs, dans lesquelles une chambre de combustion reçoit un mélange de gaz d'échappement du Diesel et d'air provenant des compresseurs pour alimenter une turbine de puissance qui fournit tout ou partie de la puissance de sortie.

L'invention vise à fournir une installation du type ci-dessus répondant mieux que celles antérieurement connues aux exigences de la pratique, notamment en ce qu'elle permet tout à la fois d'obtenir un rendement élevé, un coût par unité de puissance réduit et une grande modularité dans la gamme des puissances.

Dans ce but, l'invention propose une installation de production d'énergie comprenant:

— une unité de compression constituée d'au moins un moteur Diesel suralimenté par un turbocompresseur qui lui fournit un flux d'air primaire, l'excès d'énergie éventuellement disponible sur l'arbre du turbocompresseur étant utilisé pour augmenter l'énergie produite sur l'arbre du moteur Diesel lequel entraîne des compresseurs alternatifs et/ou rotatifs fournissant un flux d'air secondaire, ladite unité de compression pouvant cependant avantageusement être formée dans une variante privilégiée par au moins un module à pistons libres comportant deux équipages mobiles constitués de deux pistons moteurs opposés liés chacun à un piston compresseur, chaque piston compresseur délimitant deux compartiments de compression dans un cylindre compresseur, les pistons moteurs délimitant une chambre de moteur Diesel deux temps, laquelle reçoit l'air dit flux primaire fourni par un compartiment de compression primaire au moins, et dont les gaz d'échappement alimentent la turbine de détente d'un turbocompresseur comportant avantageusement un corps de compresseur rotatif primaire suralimentant le (ou les) compartiment(s) de compression dit(s) primaire(s) et au moins un corps de compression rotatif secondaire suralimentant celui (ou ceux) des compartiments de compression dit(s) "secondaire(s)" qui ne suralimente(nt) pas la chambre de moteur Diesel deux temps;

— et une unité de puissance comportant une turbine à gaz qui fournit sur son arbre la totalité de la puissance de sortie, alimentée elle-même par une chambre de combustion qui reçoit tout ou la majeure partie de l'air provenant des compartiments compresseurs secondaires ou flux secondaire.

Le module ou chaque module de l'installation doit être muni d'un système de régulation assurant:

— la commande de l'amplitude de la course de l'équipage mobile vers l'extérieur, c'est-à-dire du ' point mort extérieur ou PME;

— la commande de l'amplitude vers l'intérieur, c'est-à-dire du point mort intérieur ou PMI;

— la commande en fonction de la puissance appelée.

La régulation respectera la hiérarchie ci-dessus; lorsque l'installation comporte plusieurs modules, le système devra de plus maintenir la phase de tous les modules sauf un (modules esclaves) par rapport à un autre module pris comme référence.

Grâce à cette disposition, on arrive tout à la fois à une grande souplesse de réalisation due à la constitution modulaire, à un rendement élevé de l'unité de compression, dû notamment à la liaison mécanique directe entre pistons moteurs et pistons compresseurs, et à un coût spécifique par kW réduit, dû notamment à la suppression de l'embiellage d'un moteur Diesel classique et du compresseur entraîné par la turbine (et qui oblige à multiplier par 2,5 la puissance de cette dernière) dans le cas d'une installation classique à turbine à gaz. En résumé, l'invention permet d'associer le prix spécifique par kW faible de la turbine à gaz au rendement thermique élevé du Diesel, en éliminant dans une large mesure les inconvénients que présentent les deux approches isolément.

Il faut encore remarquer que l'absence de chambre de combustion recevant les gaz d'échappement du moteur Diesel permet de découpler complètement la pression de suralimentation du moteur Diesel de la pression d'entrée de la turbine, donc de choisir des valeurs optimales pour l'une et l'autre et de maintenir un bon rendement à charge partielle.

Dans un mode avantageux de réalisation, l'équipage mobile délimite également une cavité de volume variable dans laquelle règne une contre-pression d'air s'opposant à la course de détente des pistons moteurs et le système de régulation est prévu pour régler la contre-pression en fonction de la puissance appelée.

La régulation du PME pourra être assurée par commande de la quantité de combustible injecté et celle du PMI par commande d'un débit de dérivation d'air du cycle primaire parcourant le moteur Diesel vers le cycle secondaire parcourant l'unité de puissance.

Les équipages mobiles du module (ou de chaque module) à pistons libres sont liés de la façon habituelle par un système de synchronisation afin que leurs mouvements restent égaux mais de sens opposé lors du cycle Diesel, mais ce système de synchronisation pourra avantageusement prendre la forme d'une liaison hydraulique décrite plus loin.

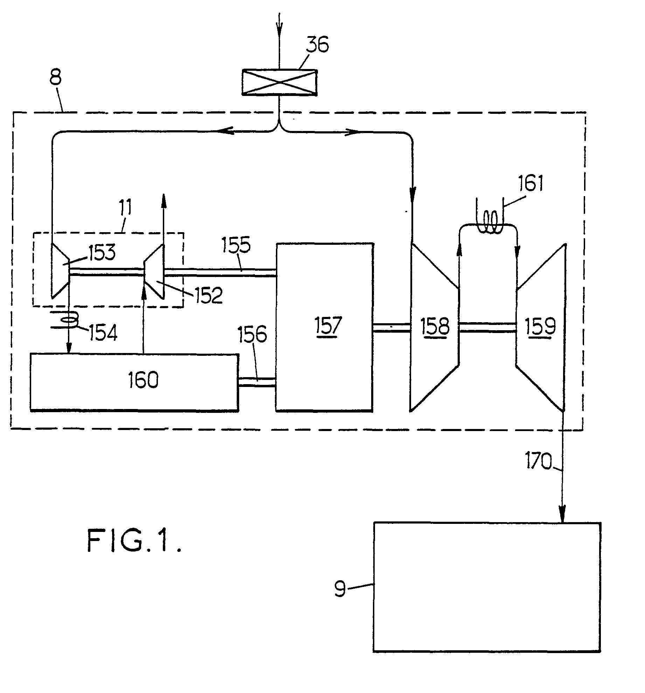

L'invention sera mieux comprise à la lecture de la description qui suit d'un mode de réalisation avantageux du dispositif selon l'invention. La description se réfère aux dessins qui l'accompagnent, dans lesquels seule la Figure 1 se rapporte à un mode de réalisation dans lequel l'unité de compression est basée sur un moteur Diesel à bielle-manivelle, toutes les autres figures se rapportant au cas où l'unité de compression est basée sur un module Diesel à pistons libres, étant entendu que l'utilisation du flux secondaire dans l'unité de puissance est la même dans les deux cas.

Dans ces conditions:

— la Figure 1 est le schéma de l'unité de compression d'une installation à double flux comprenant un moteur Diesel à bielle-manivelle fortement suralimenté, constituant un premier mode de réalisation de l'invention;

— la Figure 2 est un schéma de circulation des gaz dans une installation réalisée à partir d'un module Diesel à pistons libres suivant un mode de réalisation de l'invention;

— la Figure 3 est une vue en coupe simplifiée montrant un circuit de refroidissement des pistons moteurs utilisable dans l'installation de la Figure 2;

— la Figure 4 est une vue schématique d'un système hydraulique avantageux permettant de synchroniser les mouvements des deux équipages mobiles d'un module à pistons libres, utilisable dans l'installation de la Figure 2;

— la Figure 5 est un schéma synoptique d'un système de régulation de PME utilisable dans l'installation de la Figure 2;

— la Figure 6 est un diagramme montrant le mode de commande du "cran" de crémaillère utilisé dans le système de la Figure 5;

— la Figure 7 est un schéma synoptique de la régulation en fonction de la charge, et en fonction de la phase, dans le cas d'une installation à plusieurs modules.

Le schéma de la Figure 1 montre une installation à double flux qui comporte une unité de compression 8 et une unité de puissance 9. L'unité de compression est composée d'un moteur Diesel à bielle-manivelle 160 suralimenté par un turbocompresseur 11 composé d'une turbine de détente 152 et d'un compresseur rotatif 153. La turbine 152, à un ou plusieurs étages, est alimentée par les gaz d'échappement du moteur Diesel et entraîne le compresseur rotatif 153 aspirant de l'air atmosphérique à travers un filtre 36 et suralimentant les cylindres du moteur Diesel à travers un échangeur de chaleur réfrigérant 154. Les arbres 156 et 155 du moteur Diesel 160 et du turbocompresseur entraînent, à travers un multiplicateur à engrenages 157, deux corps de compresseurs rotatifs 158 et 159. Le premier corps 158 aspire de l'air atmosphérique et alimente, à travers un réfrigérant 161, le second corps 159. Ce dernier fournit à l'unité de puissance 9 un flux d'air comprimé 170.

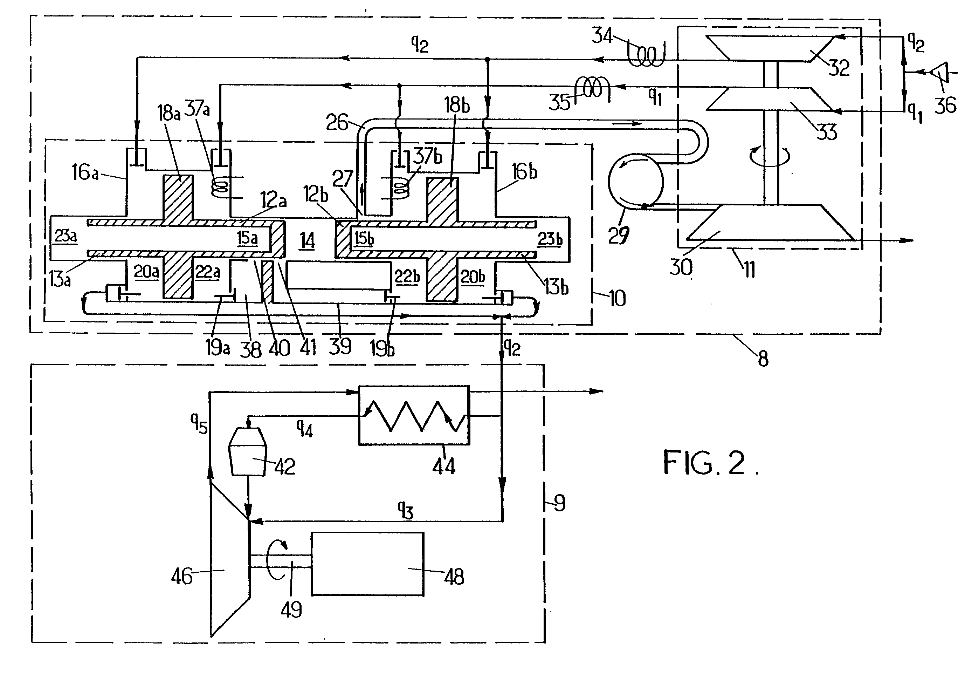

L'unité de puissance 9 peut être analogue à celle représentée en Figure 2, qui sera décrite plus loin, et comprend une turbine à gaz de puissance entraînant la charge (alternateur par exemple).

L'installation montrée en Figure 2 constitue une version particulièrement avantageuse de l'invention. Elle peut être regardée comme constituée d'une unité de compression 8 et d'une unité de puissance 9.

L'unité de compression comporte un module ou plusieurs modules 10 du type à pistons libres. Chaque module a un moteur à deux pistons opposés 12a et 12b délimitant une chambre Diesel deux temps 14 et deux cylindres compresseurs 16a et 16b à double effet. Chaque cylindre compresseur est partagé par un piston compresseur respectif 18a ou 18b en un compartiment externe 20a ou 20b et un compartiment interne 22a ou 22b.

Un circuit thermodynamique primaire, appartenant tout entier à l'unité de compression 8, comprend, à partir des lumières d'échappement 27 de la chambre de combustion 14 du moteur Diesel, au moins une conduite 26 d'amenée des gaz d'échappement à la turbine de détente 30 d'un turbocompresseur 11 de suralimentation, à travers un volume de tranquillisation aérodynamique 29. Le compresseur rotatif 32 attelé à la turbine 30 est alimenté en air atmosphérique à travers un filtre 36. Il appartient à un circuit de suralimentation secondaire propre à celui ou ceux des compartiments compresseurs qui alimentent l'unité de puissance, auxquels il délivre le débit secondaire q2. Dans le cas montré en Figure 2, ce sont les deux compartiments externes 20a et 20b des cylindres compresseurs 16a et 16b, auxquels le compresseur rotatif 32 est relié par l'intermédiaire d'un refroidisseur 34.

Un second compresseur rotatif 33 attelé à la turbine 30 est, lui aussi, alimenté en air atmosphérique à travers le filtre 36, Il appartient à un circuit de suralimentation primaire propre à celui (ou ceux) des compartiments compresseurs qui alimentent la chambre moteur Diesel 14, au(x)quel(s) il délivre le débit primaire q1. Dans le cas montré en Figure 2, ce sont les deux compartiments internes 22a et 22b des cylindres compresseurs 16a et 16b, auxquels le compresseur rotatif 33 est relié par l'intermédiaire d'un refroidisseur 35.

A pleine charge, le débit secondaire q2 est très supérieur au débit primaire q1, par exemple q2 = 3 q1.

La disposition des lumières d'admission et de balayage 40 et 41 du moteur Diesel 14 est avantageusement celle qui a été décrite dans la demande de brevet FR 85 13480 du demandeur: une rangée de lumières 41 ouvertes en premier lors du mouvement du piston 12a vers l'extérieur est inclinée sur l'axe du moteur de façon à créer un mouvement de rotation de l'air, dit "swirl". Elle est alimentée par celui des compartiments de compression internes 22b qui est le plus éloigné des lumières d'admission, à travers au moins un refroidisseur 37b avantageusement placé en totalité ou en partie dans l'espace mort du compartiment 22b, avant les clapets de refoulement 19b de ce compartiment de compression 22b. Entre le compartiment 22b et la rangée de lumières 41 l'air comprimé passe par au moins une pipe d'admission 39 dont la longueur est adaptée de manière à créer un retard à l'admission.

La rangée de lumières 40 ouvertes en dernier lors du mouvement du piston 12a vers l'extérieur est alimentée par le compartiment de compression interne 22a le plus proche des lumières d'admission, à travers au moins un refroidisseur 37a, avantageusement placé en totalité ou en partie dans l'espace mort du compartiment 22a, avant les clapets de refoulement 19a de ce compartiment de compression 22a en passant par au moins une capacité d'admission 38.

Les deux équipages mobiles 15a et 15b, constitués chacun d'un piston moteur et d'un piston compresseur, présentent chacun un prolongement 13a ou 13b qui délimite dans le bâti du module un volume variable 23a ou 23b, dit de contre-pression. Ces volumes variables sont avantageusement identiques et ont avantageusement un diamètre du même ordre que celui de la chambre 14. La pression qui y règne, et qui est réglable par un circuit non représenté, opposé à la course de détente du piston moteur une force qui augmente avec la pression. Elle est avantageusement comprise entre 20 et 50 bars pour des installations courantes.

Comme on le verra plus loin, la pression d'air dans les volumes 23a et 23b est utilisable comme paramètre de règlage du PME (point mort externe) et/ou du déphasage entre les modules dans le cas d'une installation à plusieurs modules; cependant, comme on le verra plus loin, le déphasage peut être ajusté par action sur l'avance à l'injection.

L'air sous pression dans les volumes 23a et 23b constitue de plus un matelas permettant de transférer aux pistons moteurs, au cours de la compression, une partie de l'énergie accumulée au cours de la détente. Enfin, cet air sous pression peut être utilisé pour refroidir les pistons moteurs.

L'unité de puissance 9 comporte un échangeur de chaleur 44, une chambre de combustion 42, et une turbine à gaz de puissance 46, parcourus dans cet ordre par l'air secondaire provenant des compartiments des compartiments compresseurs 20a et 20b..

Dans l'échangeur 44, une fraction q4 du débit d'air q2 provenant de l'unité de compression est chauffée par un débit q5 de gaz détendus dans la turbine 46. Une autre fraction, q3, de l'air secondaire peut être avantageusement utilisée pour refroidir, s'il y a lieu, les premiers étages de la turbine 46.

La chambre de combustion 42 est alimentée en combustible du type normalement utilisé dans les turbines à gaz industrielles (distillats lourds, gazole, gaz naturel, gaz issu de la gazéification du charbon, etc.). Enfin, l'arbre 49 de la turbine 46 est attelé à une machine tournante de génération d'énergie utile électrique ou mécanique 48, telle qu'un alternateur, un compresseur ou une pompe.

On ne décrira pas ici la constitution générale des différentes machines qui sont incorporées dans l'installation, car elle a été décrite dans des brevets antérieurs du demandeur, mais seulement la disposition qui permet de refroidir les pistons moteurs et les moyens de régulation, ainsi que celle qui permet de synchroniser le mouvement des deux équipages mobiles 15a et 15b.

A titre d'exemple, on peut cependant indiquer que les pressions, températures et débits peuvent être les suivants pour une installation à un seul module de quelques MW:

— Unité de puissance:

Débit masse q2 : environ 6,5 kg/s

Températures d'entrée dans l'échangeur 44: 575°C pour le gaz de combustion détendu dans la turbine de puissance 46 et 175°C pour l'air à 10 bars à l'entrée de la chambre de combustion 42.

— Unité de compression:

Alèsage moteur du module à pistons libres: 250 mm

Alèsage compresseur du module à pistons libres : 625 mm

Suralimentation du moteur Diesel 14 : 7 bars,

Débit masse q1 : environ 2 kg/s

Fréquence des battements : environ 10 Hz

Air à l'entrée de la turbine 30 du turbocompresseur : 6 bars à 600°C

Taux de compression du compresseur 32 : 3,5/1

Taux de compression du compresseur 33 : 1,8/1

Rendement sur l'arbre de la turbine 46 : 47 à 50% à pleine charge.

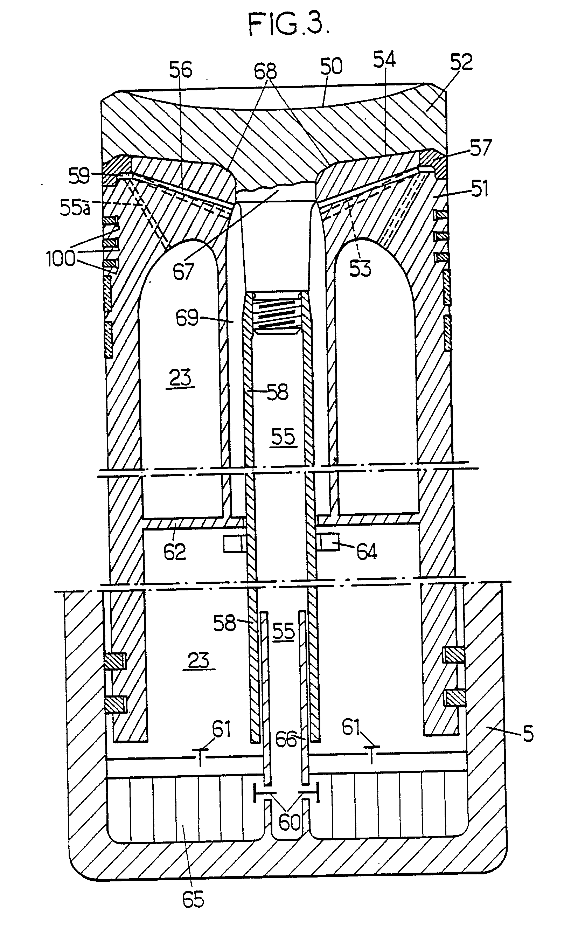

Le refroidissement des pistons moteurs 12 est avantageusement assuré par transfert thermique avec l'air provenant des volumes de contre-pression 23 qui communiquent avec des volumes internes aux pistons. Pour atteindre ce résultat, on peut donner à la tête des pistons moteurs la constitution montrée en Figure 3, qui tient compte du fait que la chambre moteur Diesel deux temps est, dans ce genre d'installation, alimentée en combustible du type normalement utilisé dans les turbines à gaz industrielles, au même titre que la chambre de combustion 42 de l'unité de puissance 9; du fait de cet emploi, on peut laisser s'élever la température de la paroi du piston qui est directement en contact avec la chambre de combustion Diesel 14 jusqu'à des valeurs relativement élevées.

La tête de piston 51 est surmontée d'un bouclier thermique 52 en acier inoxydable dont la peau 50 peut atteindre des températures de 700°C. Le bouclier thermique présente un appendice cylindrique 67 ajusté dans la tête de piston et mis en tension par un tube 58 fixé par un écrou 64 sur des entretoises 62 intérieures au piston.

La tête de piston .est percée d'une série de canaux d'amenée d'air de refroidissement 55a et de canaux d'évacuation d'air 56. Une rigole 59 ménagée par une bague vissée ou soudée 57 met en communication les canaux 55a et 56. L'air de refroidissement arrive par le volume annulaire 23 (volume 23a ou 23b sur la Figure 2) dans la tête de piston, passe par les canaux 55a, la rigole 59 et les canaux 56, puis s'échappe par un volume annulaire 69 et, à travers une série de fentes ou de trous, l'intérieur 55 du tube 58. Des canaux de purge 53 font communiquer la rigole 59 avec l'aval de l'écoulement.

Le bouclier 52 et la tête de piston 51 sont séparés, sur une partie de leur surface de contact, par une fente 54, de quelques centièmes de millimètre à chaud. Cette fente assure une résistance thermique supplémentaire entre le bouclier et la tête de piston du fait de l'air qui y circule lors du mouvement du piston. On obtient ainsi un excellement refroidissement de la tête de piston dans la zone des gorges de segment 100. Un contact parfait reste cependant assuré dans la zone centrale 68 pour la transmission des efforts de pression et d'inertie.

La circulation de l'air de refroidissement provenant du volume de contrepression 23 à travers les canaux 55a et 56 est assurée par le mouvement même du piston grâce à un jeu de clapets 60 et 61 situés de part et d'autre d'un échangeur réfrigérant à circulation d'eau 65. L'ensemble clapets-réfrigérant peut être fixé au bâti 59 et alimenté par un tube fixe 66 coulissant à l'intérieur du tube 58.

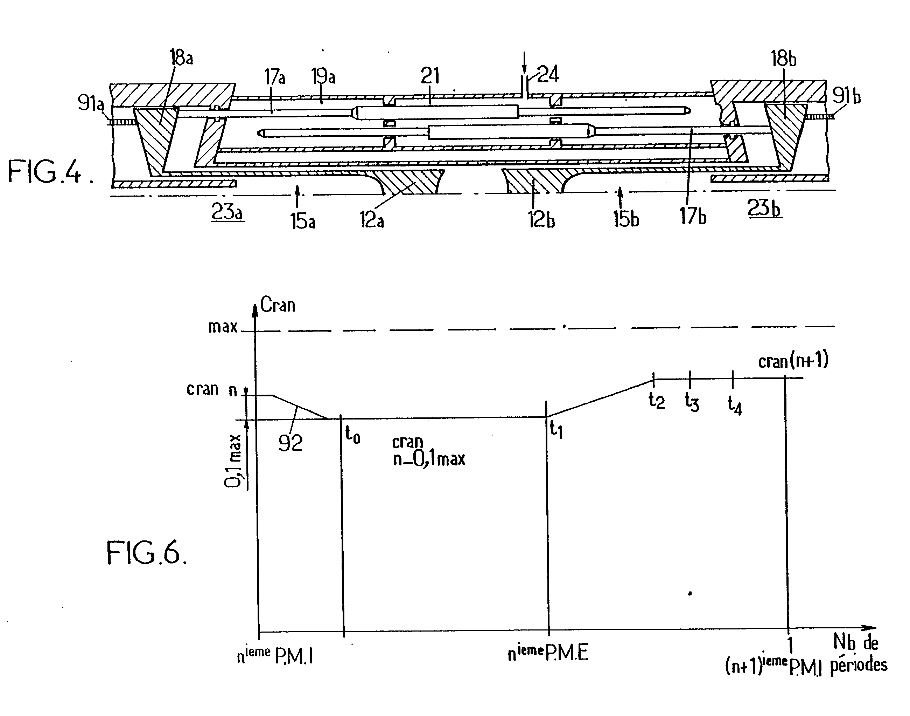

Pour synchroniser les deux équipages mobiles et permettre leur virage à l'arrêt, les intallation habituellement à pistons libres comportent des moyens mécaniques (crémaillères et roue dentée, ciseaux de Nuremberg, vis sans fin, etc.). Dans l'installation montrée en Figure 4, ces moyens sont remplacés par au moins un système hydraulique.

Les pistons compresseurs 18a et 18b des équipages mobiles 15a et 15b montrés en Figure 4 portent des pistons plongeurs respectifs à sections différentielles, 17a et 17b, plongeant dans deux chambres hydrauliques étanches 19a et 19b, réalimentées en marche pour compenser les fuites éventuelles à partir d'un circuit de régulation piloté par des capteurs de course 91a et 91b.

En cas de dissymétrie d'efforts sur les équipages mobiles 15a et 15b, ce système crée dans les chambres 19a et 19b une pression d'huile hydraulique différentielle qui tend à rétablir la synchronisation des mouvements des équipages mobiles.

A l'arrêt, on peut "virer" les équipages mobiles vers l'extérieur par admission d'une pression d'huile de virage 24 dans la chambre hydraulique étanche centrale 21, vidangée avant le démarrage. On peut "virer" vers l'intérieur par établissement d'une pression d'air dans les cavités 23a et 23b. Une boucle (non représentée) est alors prévue pour régler les pressions d'huile de virage et d'air de virage de manière à assurer en souplesse le virage dans les deux sens.

Le système de régulation d'une installation du type qui vient d'être décrit, doit, dans l'ordre hiérarchique des fonctions:

1) commander l'amplitude de la course vers l'extérieur, c'est-à-dire la position du PME, par régulation rapide (constante de temps de 20 ms par exemple),

2) commander l'amplitude de la course vers l'intérieur (PMI) par régulation semi-rapide (1 ms par exemple),

3) si l'installation est à N modules avec déphasage de $2\pi/N$, maintenir la phase correcte entre les N modules, avec un temps de réponse lent par rapport à celui des régulateurs précédents (10 s par exemple).

4) suivre la puissance appelée sur l'arbre de la turbine 46, avec un temps de réponse également long (10 s par exemple).

On décrira maintenant la constitution de circuits permettant de remplir ces fonctions.

Régulation de la course vers l'extérieur.

Cette régulation doit s'effectuer cycle par cycle et utilise la position du PME comme paramètre d'entrée et la quantité de combustible injectée comme paramètre de commande. Elle a pour but de maintenir la position réelle du PME à une valeur de consigne fonction de la charge. Pour obtenir ce résultat, il est important d'agir sur le paramète de commande ("cran" d'injection de la pompe) avec un retard aussi faible que possible après mesure du paramètre d'entrée; on cherche donc à effectuer la correction requise pour l'injection qui suit immédiatement la mesure, dans un délai ne dépassant pas 35% de la durée du cycle.

Pour atteindre ce résultat, il est avantageux que les corrections à apporter soient toujours dans le sens d'une augmentation du cran. Pour qu'il soit cependant possible de réduire aussi bien que d'augmenter le cran par rapport au cycle précédent, le dispositif suivant l'invention effectue systématiquement, dès injection, la réduction maximale qui peut être nécessaire d'un cycle à l'autre. La correction qui peut être nécessaire est alors toujours de signe positif.

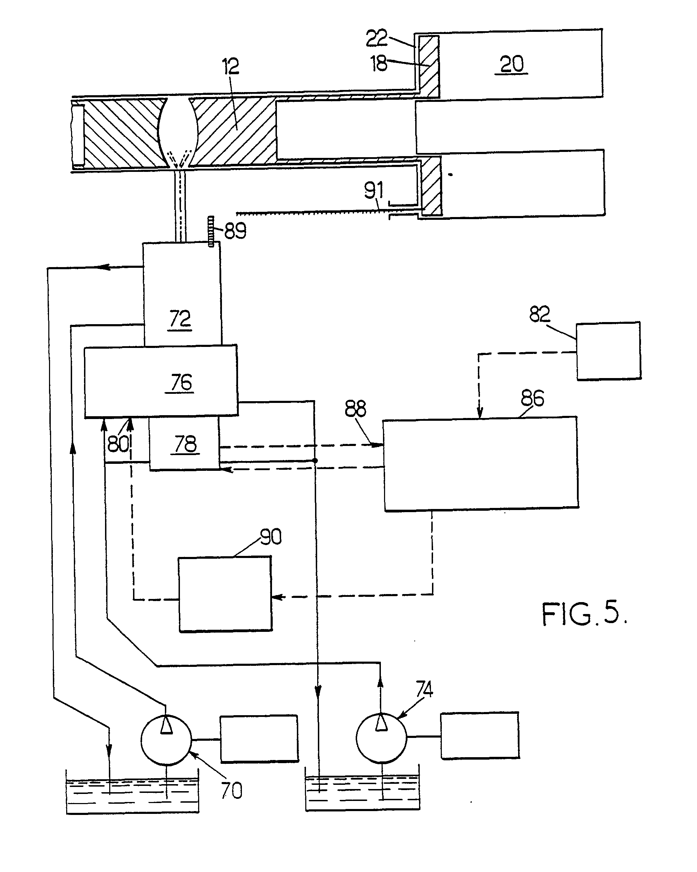

Le dispositif peut avoir la constitution montrée en Figure 5, et comprend un circuit de combustible qui a une moto-pompe basse pression à combustible 70 et une pompe d'injection 72 et un circuit hydraulique de puissance constitué d'une pompe haute pression 74 et d'une unité motrice d'injection 76 munie d'un circuit électrique de règlage de cran 78 et d'une entrée de commande d'injection 80.

Le circuit de régulation proprement dit est de type numérique. Il comporte un pupitre de commande 82 qui fournit une valeur de consigne de PME. La valeur réelle du PME est fournie par un capteur de position numérique 91 qui peut également fournir la valeur réelle de PMI et, pour le déclenchement de l'injection, des "top" de passage de l'équipage mobile et sa vitesse. Ces dernières informations constituent des données à partir desquelles un coffret électronique 86 détermine la correction à apporter à l'instant d'injection. L'unité de règlage de cran 78 est à fonctionnement incrémental et peut comporter un moteur pas-à-pas accouplé à une pompe hydraulique. Elle possède un capteur de position 89 qui fournit un signal de valeur effective du cran pour chaque injection sur une entrée 88 du coffret 86.

L'ordre d'injection est fourni par le coffret 86 à une soupape 90 de déclenchement d'injection qui constitue un dispositif de conversion électrique-hydraulique avec amplification fournissant l'impulsion de commande d'injection à l'unité motrice 76.

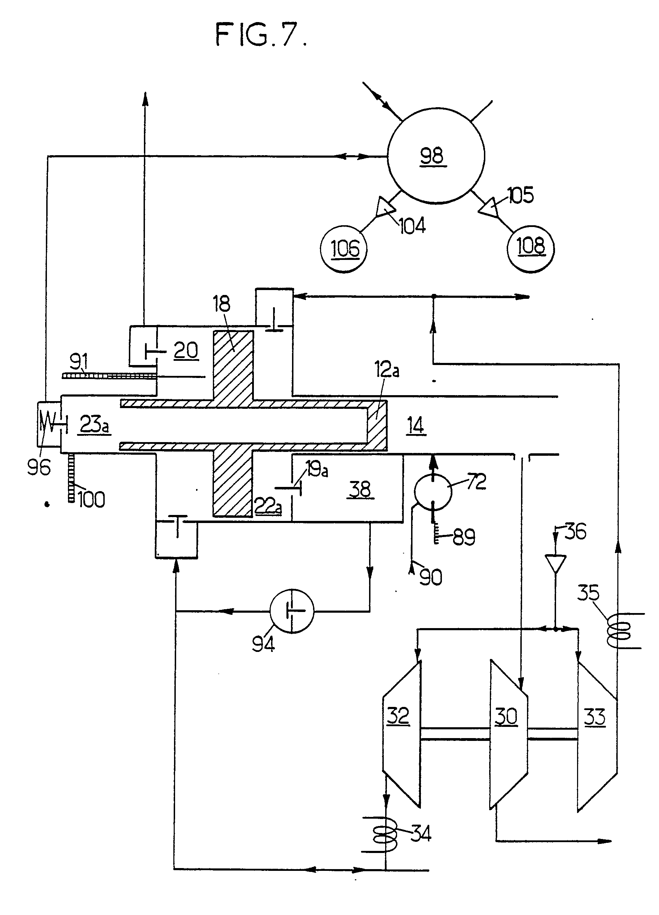

Le mode d'action du dispositif de régulation apparaît sur la figure 6. La réduction préventive du cran après le nième passage en PMI apparaît en 92. Ensuite interviennent:

— de $t_0$ à $t_1$ (passage au PME), le traitement des données, à l'issue duquel la nouvelle valeur du PME est acquise,

— de $t_1$ à $t_2$, le nouvel ajustement de la valeur du cran, par maintien ou accroissement,

— de $t_2$ à $t_3$, un temps qui reste disponible, jusqu'au début d'injection,

— à partir de $t_3$, l'injection,

— en $t_4$ le passage au PMI, également détecté et mesuré.

Régulation du PMI

Il est à noter que la pression $P_1$ régnant dans la capacité d'admission 38 du moteur Diesel 14, c'est-à-dire à la sortie des compartiments compresseurs primaires, est, à tous les régimes, maintenue à une valeur supérieure à celle de la pression $P_2$ régnant à la sortie du compresseur rotatif 32, c'est-à-dire à l'entrée des compartiments compresseurs secondaires. Dans ces conditions, la régulation du PMI peut s'effectuer, selon le dispositif schématisé en Figure 7, par dérivation d'air primaire vers le circuit secondaire à l'aide d'une vanne 94 reliant la capacité d'admission 38 associée à l'un des compartiments de compression internes 22 à la sortie du compresseur rotatif 32. La vanne 94 commandée par la mesure du PMI 91 est fermée à pleine charge; à charge partielle, son ouverture provoque une diminution du PMI par diminution de la résistance pneumatique des compartiments primaires 22a et 22b; sa fermeture provoque une augmentation du PMI par augmentation de cette résistance pneumatique.

Réglage de la phase relative des modules

De légères variations de l'avance à l'injection permettent de modifier la fréquence des battements des équipages mobiles. Comme par ailleurs, dans une installation à N modules, il est souhaitable de les phaser entre eux en maintenant un déphasage régulier de $2\pi/N$, ce déphasage régulier est avantageusement maintenu en choisissant un module maître. Le coffret électronique 86 effectue alors une comparaison entre le moment de passage au PME du module maître et celui des autres modules (modules escalves) affectés respectivement d'un déphasage $kx2\pi/N$ ($k = 1, 2, \ldots N-1$) et agit en conséquence sur l'avance à l'injection..

Une autre manière d'obtenir le déphasage des modules esclaves est par action sur la contrepression régnant dans les volumes 23.

Adaptation à la charge appelée sur l'arbre de la turbine de l'unité de puissance

L'adaptation à la charge appelée par le réseau sur l'arbre de la turbine de puissance s'effectue selon le schéma de la Figure 5 par action sur la contrepression régnant dans les volumes 23, en fonction d'une mesure 100 de cette contrepression.

Dans une installation à N modules, les 2N volumes de contrepression 23 sont reliés à une capacité commune 98, laquelle peut être, sur appel du réseau, alimentée en air comprimé par une capacité 106 à travers un détendeur 104 ou déchargée dans une capacité 108 à travers un détendeur 105. Une électrovanne 96 commandée par le passage au PMI mesuré par le capteur 91 met en communication pendant un temps bref chaque capacité 23 avec la capacité commune 98 afin d'y établir par incréments discrets la contrepression correspondant à l'appel de charge extérieure. Ces variations de la contrepression modifient le PME des équipages mobiles et provoquent de ce fait l'adaptation du cran de combustible à la charge selon le mode de régulation du PME décrit ci-dessus.

**Revendications**

1. Installation de production d'énergie comprenant une unité de compression (8) comportant au moins un moteur à cycle Diesel (12a, 12b, 14; 160) suralimenté par une turbosoufflante (11) composée d'une turbine de détente (30; 152) alimentée par les gaz d'échappement du moteur (12a, 12b, 14; 160) et d'un compresseur rotatif (33, 153) aspirant à l'atmosphère à travers un filtre (36), lequel compresseur suralimente sous forme d'un flux primaire les chambres de combustion du moteur Diesel par l'intermédiaire d'un réfrigérant (35, 154), caractérisée en ce que le moteur Diesel entraîne deux corps de compresseur (18a, 18b; 158, 159) alimentés en air atmosphérique à travers un filtre (36) et dont l'un fournit un flux secondaire (q2, 170) à une unité de puissance (9) comportant une chambre de combustion (42) alimentée, avantageusement à travers un échangeur de chaleur (44), par une partie (q4) au moins du flux d'air secondaire issu de l'unité de compression (8), la chambre de combustion alimentant elle-même une turbine

fournissant sur son arbre (49) la totalité de la puissance de sortie.

2. Installation selon la revendication 1, caractérisée en ce que le moteur Diesel est du type à bielle-manivelle à deux arbres (156, 155), qui entralne à travers un multiplicateur (157) les deux corps de compresseurs (158, 159) de type rotatif séparés par un réfrigérant (161), le premier corps (158) étant alimenté en air atmosphérique et le second corps (159) délivrant le flux secondaire (170).

3. Installation selon la revendication 1, caractérisée en ce que l'unité de compression (8) comporte au moins un module à pistons libres (10) ayant deux équipages mobiles (15a et 15b) constitués chacun d'un piston (12a, 12b) du moteur Diesel, et d'un piston compresseur (18a, 18b), les pistons compresseurs délimitant chacun deux compartiments compresseurs répartis entre compartiments internes ou primaires (22a, 22b) et externes ou secondaires (20a, 20b), la chambre (14) limitée par les pistons (12a, 12b) du moteur recevant l'air de suralimentation fourni par les compartiments compresseurs internes (22a, 22b) et alimentant la turbine (30) de la turbosoufflante (11), ladite turbine de détente entraînant deux corps de compresseurs rotatifs primaire (33) et secondaire (32) aspirant respectivement à l'atmosphère un flux d'air primaire (q1) et un flux d'air secondaire (q2), et alimentant respectivement, à travers des réfrigérants (35, 34), les compartiments compresseurs internes (22a, 22b) et les compartiments compresseurs externes (20a, 20b) qui fournissent le flux d'air secondaire (q2).

4. Installation selon la revendication 1, 2 ou 3, caractérisée en ce que le débit des gaz d'échappement (q5) de la turbine de l'unité de puissance réchauffe le débit d'air q4 dans l'échangeur (44), une faible fraction (q3) du flux secondaire pouvant être utilisée au refroidissement d'un ou plusieurs étages de ladite turbine (46).

5. Installation selon la revendication 3, caractérisée en ce que le flux d'air primaire produit par les compartiments compresseurs (22a, 22b) suralimente la chambre du moteur Diesel (14) à travers des réfrigérants (37a et 37b) à travers deux rangées de lumières d'admission et de balayage (40 et 41), les lumières (41) les plus proches du centre de la chambre moteur (14) étant alimentées par le compartiment compresseur primaire le plus éloigné (22b) des lumières d'admission à travers au moins une pipe d'admission (39), les lumières (40) les plus éloignées du centre de la chambre moteur (14) étant alimentées à travers une capacité d'admission (38) par le compartiment compresseur adjacent (22a), les réfrigérants (37a et 37b) pouvant avantageusement être placés en totalité ou en partie dans les espaces morts des compartiments compresseurs correspondants (22a et 22b) et avant les jeux de clapets de refoulement (19a et 19b).

6. Installation selon la revendication 3, caractérisée en ce que chacun des équipages mobiles (15a et 15b) délimite respectivement une cavité (23a et 23b) de volume variable dans laquelle règne une contrepression d'air s'opposant à la course de détente des équipages mobiles (15a et 15b) et transférant ainsi une partie de l'énergie de détente vers l'énergie de compression, ladite contrepression étant réglée par un système de régulation en fonction de la puissance appelée.

7. Installation selon la revendication 6, caractérisée en ce que les pistons moteurs (12) sont munis d'un circuit de refroidissement par circulation d'air à partir des cavités (23), l'air sous pression étant réfrigéré au passage dans des réfrigérants (65) placés dans les cavités (23) entre deux jeux de clapets de non retour (60 et 61) lesquels permettent de mettre en circulation l'air de refroidissement par le mouvement même des pistons.

8. Installation selon la revendication 3, caractérisée en ce que le mouvement des deux équipages mobiles (15a, 15b) est synchronisé par un système hydraulique comportant deux pistons plongeurs à sections différentielles (17a, 17b) liés respectivement aux pistons compresseurs (18a, 18b) des équipages mobiles (15a, 15b), lesdits pistons plongeurs plongeant dans deux chambres hydrauliques étanches (19a, 19b) réalimentées en marche pour compenser les fuites à partir d'un circuit de régulation piloté par des capteurs d'acquisition de course (91a, 91b).

9. Installation selon la revendication 8, caractérisée en ce qu'elle comprend une chambre hydraulique centrale (21), vidangée en marche, de virage vers l'extérieur des équipages mobiles par établissement d'une pression d'air dans des cavités (23a, 23b) des équipages mobiles.

10. Installation selon la revendication 5, comportant plusieurs modules à pistons libres, caractérisée en ce que chaque module a un système de régulation individuel assurant

— le contrôle et la commande de l'amplitude de la course des équipages mobiles vers l'extérieur avec une constante de temps faible, s'effectuant à partir de la mesure du point mort extérieur (PME) par action sur le "cran" de combustible;

— le contrôle et la commande de l'amplitude de la course des équipages mobiles vers l'intérieur avec une constante de temps plus élevée, de l'ordre de la seconde par exemple, ce contrôle s'effectuant par la mise en communication de la capacité d'admission (38) avec la sortie du compresseur rotatif (32);

— le contrôle et la commande de la contrepression régnant dans les cavités (23) en fonction de la puissance appelée avec une constante de temps longue de l'ordre de 10 secondes par exemple.

11. Installation selon l'une quelconque des revendications 3 et 5, caractérisée en ce que le système de régulation comprend, pour le module ou chaque module, des moyens pour réduire systématiquement le cran d'une pompe d'injection de combustible dans le cylindre moteur à l'issue de chaque injection et des moyens pour corriger ensuite le cran par augmentation éventuelle en réponse à l'écart entre la valeur de consigne du point mort externe et la valeur réelle mesurée au cycle précédent.

12. Installation selon la revendication 6, comportant N modules (N étant supérieur à 1), caractérisée en ce que le système de régulation comporte soit des moyens pour agir sur la contrepression régnant dans les cavités (23a, 23b) à l'arrière des pistons moteurs, soit des moyens pour agir sur l'avance à l'injection, afin de faire varier lentement la fréquence de (N-1) modules esclaves par rapport à celle d'un module maître et d'obtenir un déphasage de $2\pi/N$ entre les N modules, avec une constante de temps longue, de l'ordre de plusieurs secondes.

**Patentansprüche**

1. Energieerzeugungsanlage mit einer Verdichtungseinheit (8), die zumindest einen nach dem Dieselverfahren arbeitenden Motor (12a, 12b, 14;

160) aufweist, der von einem Turbolader (11) aufgeladen wird, welcher eine von den Auspuffgasen des Motors (12a, 12b, 14; 160) gespeiste Entspannungsturbine (30; 152) und einen Umlaufverdichter (33, 153) aufweist, der aus der Atmosphäre über einen Filter (36) ansaugt, wobei der Verdichter die Kammern des Dieselmotors in Form eines Primärstromes über einen Kühler (35, 154) auflädt, dadurch gekennzeichnet, daß der Dieselmotor zwei Verdichterkörper (18a, 18b; 158, 159) antreibt, die über einen Filter (36) mit atmosphärischer Luft gespeist werden und von denen der eine einen Sekundärstrom (q2, 170) an eine Leistungseinheit (9) abgibt, die eine Brennkammer (42) aufweist, welche vorteilhaft über einen Wärmeaustauscher (44) mit zumindest einem Teil (q4) des aus der Verdichtungseinheit (8) austretenden Sekundärluftstromes gespeist wird, wobei die Brennkammer ihrerseits eine Turbine speist, die auf ihrer Welle (49) die gesamte Ausgangsleistung liefert.

2. Anlage nach Anspruch 1, dadurch gekennzeichnet, daß der Dieselmotor vom Pleuelstangen-Kurbeltyp mit zwei Wellen (156, 155) ist, der über ein Übersetzungsgetriebe (157) die beiden Verdichterkörper (158, 159) antreibt, die vom Umlauftyp und durch einen Kühler (161) getrennt sind, wobei der erste Körper (158) mit atmosphärischer Luft gespeist wird und der zweite Körper (159) den Sekundärstrom (170) liefert.

3. Anlage nach Anspruch 1, dadurch gekennzeichnet, daß die Verdichtungseinheit (8) zumindest mit einem, frei fliegende Kolben aufweisenden Modul (10) ausgestattet ist, der zwei bewegte Teile (15a und 15b) hat, die je durch einen Kolben (12a, 12b) des Dieselmotors und einen Verdichterkolben (18a, 18b) gebildet sind, wobei die Verdichterkolben je zwei Verdichterkammern begrenzen, die in innere Kammern bzw. Hauptkammern (22a, 22b) und äußere Kammern bzw. Sekundärkammern (20a, 20b) aufgeteilt sind, wobei die von den Motorkolben (12a, 12b) begrenzte Kammer (14) von den beiden inneren Verdichterkammern (22a, 22b) gelieferte Ladeluft erhält und die Turbine (30) des Turboladers (11) speist, wobei diese Entspannungsturbine die beiden Körper des Hauptumlaufverdichters (33) und Sekundärumlaufverdichters (32) antreibt, die aus der Atmosphäre einen Primärluftstrom (q1) und einen Sekundärluftstrom (q2) ansaugen und über Kühler (35, 34) die inneren Verdichterkammern (22a, 22b) sowie die äußeren Verdichterkammern (20a, 20b) speisen, welche den Sekundärluftstrom (q2) abgeben.

4. Anlage nach einem der Ansprüche 1 bis 3, dadurch gekennzeichnet, daß die aus der Turbine der Leistungseinheit abgegebene Menge an Abgas (q5) die den Austauscher (44) durchsetzende Luftmenge (q4) erwärmt, wobei ein kleiner Anteil (q3) der Sekundärströmung zum Kühlen in einer oder mehreren Stufen der Turbine (46) ausgenützt werden kann.

5. Anlage nach Anspruch 3, dadurch gekennzeichnet, daß der von den Verdichterkammern (22a, 22b) erzeugte Primärluftstrom die Kammer (14) des Dieselmotors über Kühler (37a und 37b) über zwei Reihen von Einlaß und Spülöffnungen (40 und 41) auflädt, wobei die Öffnungen (41), welche der Mitte der Motorkammer (14) am nächsten liegen, von der von den Einlaßöffnungen am weitesten entfernten Hauptverdichterkammer (22b) über zumindest ein Einlaßrohr (39) gespeist werden, wobei die von der Mitte der Motorkammer (14) am weitesten entfernten Öffnungen (40) über einen Einlaßraum (38) von der benachbarten Verdichterkammer (22a) gespeist werden, wobei die Kühler (37a und 37b) vorteilhaft in ihrer Gesamtheit oder zum Teil in den Toträumen der entsprechenden Verdichterkammern (22a und 22b) und vor den Sätzen von Förderventilen (19a und 19b) angeordnet sein können.

6. Anlage nach Anspruch 3, dadurch gekennzeichnet, daß jeder der beweglichen Teile (15a und 15b) einen Hohlraum (23a und 23b) mit variablem Volumen begrenzt, in dem ein Gegenluftdruck herrscht, der dem Entspannungshub der beweglichen Teile (15a und 15b) entgegenwirkt und auf diese Weise einen Teil der Entspannungsenergie auf die Verdichtungsenergie überträgt, wobei der Gegendruck durch ein Regelsystem in Abhängigkeit von der geforderten Leistung geregelt wird.

7. Anlage nach Anspruch 6, dadurch gekennzeichnet, daß die Motorkolben (12) durch Luftströmung aus den Hohlräumen (23) mit einem Kühlkreis ausgestattet sind, wobei die Druckluft beim Durchgang durch die Kühler (65) gekühlt wird, die in den Hohlräumen (23) zwischen zwei Sätzen von Rückschlagventilen (60 und 61) angeordnet sind, welche es ermöglichen, die Kühlluft durch die Bewegung der Kolben in Strömung zu versetzen.

8. Anlage nach Anspruch 3, dadurch gekennzeichnet, daß die Bewegung der beiden beweglichen Teile (15a, 15b) durch ein Hydrauliksystem synchronisiert wird, das zwei Tauchkolben (17a, 17b) mit unterschiedlichem Querschnitt aufweist, die mit den Verdichterkolben (18a, 18b) der beweglichen Teile (15a und 15b) verbunden sind, wobei die Tauchkolben in zwei dichte Hydraulikkammern (19a, 19b) eintauchen, die im Betrieb nachgespeist werden, um die Leckverluste aus einem Regelkreis zu kompensieren, der durch Wegfühler (91a, 91b) gesteuert wird.

9. Anlage nach Anspruch 8, dadurch gekennzeichnet, daß sie eine im Betrieb entleerte zentrale Hydraulikkammer (21) für die Umkehr der beweglichen Teile nach außen durch Erzeugung einer Luftströmung in den Hohlräumen (23a, 23b) der beweglichen Teile aufweist.

10. Anlage nach Anspruch 5, mit mehreren Modulen mit frei fliegenden Kolben, dadurch gekennzeichnet, daß jeder Modul ein individuelles Regelsystem aufweist, welches bewirkt

— die Kontrolle und Steuerung der Amplitude des Hubes der beweglichen Teile nach außen mit einer kleinen Zeitkonstanten, ausgehend von einer Messung des äußeren Totpunktes (PME) durch Einwirkung auf die Brennstoff-Schaltstufe;

— die Kontrolle und Steuerung der Amplitude des Hubes der beweglichen Teile nach innen mit einer größeren Zeitkonstanten, in der Größenordnung von beispielsweise 1 s, wobei diese Kontrolle durch Inverbindungsetzen des Einlaßraumes (38) mit dem Auslaß des Umlaufverdichters (32) erfolgt.

— die Kontrolle und Steuerung des in den Hohlräumen (23) herrschenden Gegendruckes in Abhängigkeit von der geforderten Leistung mit einer langen Zeitkonstanten in der Größenordnung von beispielsweise 10 s.

11. Anlage nach einem der Ansprüche 3 und 5, dadurch gekennzeichnet, daß das Regelsystem für den Modul bzw. für jeden Modul Mittel aufweist, um die Schaltstufe einer Pumpe zum Einspritzen von Brennstoff in den Motorzylinder am Beginn jeder Einspritzung systematisch zu verringern, und Mittel zum nachfolgenden Korrigieren der Schaltstufe durch allfällige Erhöhung in Abhängigkeit von der Entfernung zwischen dem Bezugswert des äußeren Totpunktes und dem im vorhergehenden Zyklus tatsächlich gemessenen Wert.

12. Anlage nach Anspruch 6, die N Module aufweist (N größer 1), dadurch gekennzeichnet, daß das Regelsystem entweder Mittel aufweist, welche auf den in den Hohlräumen (23a, 23b) hinter dem Motorkolben herrschenden Gegendruck einwirken, oder Mittel, welche auf die Einspritzung voreinwirken, um die Frequenz der dem Hauptmodul untergeordneten (N-1) Module langsam variieren zu lassen und eine Phasenverschiebung von $2\pi/N$ zwischen den N Modulen mit einer langen Zeitkonstanten in der Größenordnung von mehreren Sekunden zu erreichen.

**Claims**

1. Energy producing installation comprising a compression unit (8) including at least one Diesel cycle engine (12a, 12b, 14; 160) supercharged by a turboblower (11) having an expansion turbine (30; 152) fed with the exhaust gas of the engine (12a, 12b 14; 160) and a rotary compressor (33, 153) which draws air from atmosphere through a filter (36), said compressor supercharging the Diesel chambers as a primary flow through a cooler (35, 154),
characterized in that the Diesel engine drives two compressor bodies (18a, 18b; 158, 159) fed with atmospheric air through a filter (36), one of which delivers a secondary flow (q2, 170) to a power unit (9) having a combustion chamber (42) fed, preferably through a heat exchanger (44) with at least part (q4) of the secondary air flux from the compression unit (8), the combustion chamber feeding a turbine which delivers the whole output power on its shaft (49).

2. Installation according to claim 1,
characterized in that the Diesel engine is of the crank-connecting rod type with two shafts (156, 155) which drive, through a step up gear (157), the two rotary type compressor bodies (158, 159), separated by a cooler (161), the first body (158) being fed with atmospheric air and the second body (159) delivering the secondary flow (170).

3. Installation according to claim 1,
characterized in that the compression unit (8) comprises at least one free-piston module (10) having two movable units (15a and 15b) each consisting of a piston (12a, 12b) of the Diesel engine and of a compressor piston (18a, 18b), the compressor pistons each defining two compressor compartments distributed into internal or primary compartments (22a, 22b) and external or secondary compartments (20a, 20b), the chamber (14) defined by the pistons (12a, 12b) of the engine receiving the super-charging air delivered by the internal compressor compartments (22a, 22b) and feeding the turbine (30) of the turboblower (11), said expansion turbine driving the primary (33) and secondary (32) rotary compressor bodies respectively drawing from the atmosphere a primary air flow (q1) and a secondary air flow (q2), and respectively feeding, through coolers (35, 34), the internal compressor compartments (22a, 22b) and the external compressor compartments (20a, 20b), which deliver the secondary air flow (q2).

4. Installation according to claim 1, 2 or 3,
characterized in that the flow of the exhaust gases (q5) from the turbine of the power unit heats the air flow (q4) in the exchanger (44), a small fraction (q3) of the secondary air flow being possibly used for cooling one or more stages of said turbine (46).

5. Installation according to claim 3,
characterized in that the primary air flow generated by the compressor compartments (22a, 22b) supercharges the chamber of the Diesel engine (14) through coolers (37a and 37b) through two rows of intake and scavenging ports (40 and 41), the ports (41) closest to the center of the engine chamber (14) being fed by the primary compressor compartment (22b) the furthest away from the intake ports through at least one intake pipe (39), the ports (40) furthest away from the engine chamber (14) being fed through an intake capacity (38) by the adjacent compressor compartment (22a), the coolers (37a and 37b) being advantageously placed wholly or partially in the dead spaces of the respective compressor compartments (22a, 22b) and before the sets of delivery valves (19a and 19b).

6. Installation according to claim 3,
characterized in that each of the movable units (15a, 15b) respectively defines a cavity (23a and 23b), of variable volume in which an air counterpressure prevails which opposes the expansion stroke of the movable units (15a, 15b) and thus transfers part of the expansion energy to the compression energy, said counter pressure being metered by a regulation system responsive to the power required.

7. Installation according to claim 6,
characterized in that the drive pistons (12) are provided with a circuit for cooling by an air flow from the cavities (23), the pressurized air being cooled on passing through coolers (65) placed in the cavities (23) between two sets of non-return check valves (60 and 61) which allow the cooling air to be circulated due to the movement of the pistons.

8. Installation according to claim 3,

characterized in that the movements of the two mobile assemblies (15a, 15b) are synchronized by a hydraulic system having two plunger pistons with differential cross-sectional areas (17a, 17b) connected respectively to the compressor pistons (18a, 18b) of the movable units (15a, 15b), said plunger pistons plunging into two tight hydraulic chambers (19a, 19b) fed during operation for compensating the leaks from a regulation circuit driven by stroke measuring sensors (91a, 91b).

9. Installation according to claim 8,

characterized in that it comprises a central hydraulic chamber (21) scavenged during operation, for moving the movable units outwardly by establishing an air pressure in cavities (23a, 23b) of the movable units.

10. Installation according to claim 5, comprising a plurality of free piston modules,

characterized in that each module has an individual regulation system ensuring

— monitoring and control of the amplitude of the outward stroke of the movable units with a low time constant, derived from the measurement of the outer dead point (PME) by acting on the fuel pump delivery stroke;

— monitoring and control of the amplitude of the inward stroke of the movable units with a higher time constant, of the order of magnitude of a second for example, said control being effected by communicating the intake capacity (38) with the output of the rotary compressor (32);

— monitoring and control of the counterpressure prevailing in the cavities (23) responsive to the required power, with a long time constant whose order of magnitude is 10 seconds for example.

11. Installation according to any one of claims 3-5,

characterized in that the regulation system includes, for the module or each module, means for systematically reducing the fuel delivery per stroke of a pump injecting fuel into the Diesel chambers following each injection and means for then correcting the fuel delivery per stroke by a possible increase in response to the discrepancy between a set value of the outer dead center and the actual value measured during the preceding cycle.

12. Installation according to claim 6, comprising N modules (N being greater than 1),

characterized in that the regulation system includes either means for adjusting the counterpressure prevailing in the cavities (23a, 23b) at the rear of the engine pistons, or means for adjusting the injection advance, so as to slowly vary the frequency of (N-1) slave modules with respect to that of a master module and to obtain a mutual phase shift of $2\pi/N$ between the N modules, with a long time constant, of the order of magnitude of several seconds.

36
8
161
11
153
155
152
154
156
157
158
159
160
170
9

FIG.1.

36
$q_2$
$q_1$
32
33
8
11
30
29
34
35
10
9
16b
13b
23b
18b
20b
37b
22b
19b
15b
26
27
12b
14
39
41
40
12a
15a
38
37a
18a
22a
19a
20a
16a
23a
13a
44
48
$q_3$
$q_4$
42
49
46
$q_5$

FIG. 2.

FIG.3.

56
68
50
54
52
57
59
51
55a
100
67
53
69
23
58
55
62
64
58
55
23
61
66
61
5
60
65

18a
17a
19a
21
24
18b
91a
91b
23a
15a
12a
12b
15b
17b
23b
Cran
max
cran n
0,1 max
92
t0
cran
n–0,1max
t1
t2
t3
t4
cran(n+1)
nieme P.M.I
nieme P.M.E
1
(n+1)ieme P.M.I
Nb de périodes

FIG.4.

FIG.6.

22
18
12
20
91
89
72
82
76
86
88
80
78
90
74
70


FIG. 5.

FIG.7.

98
105
104
106
108
18
20
91
12a
23a
14
96
19a
72
38
100
22a
89
36
90
35
94
32
30
33
34